Europäisches Patentamt

European Patent Office

Office européen des brevets

(19)

(11) **EP 0 864 818 B1**

(12) **FASCICULE DE BREVET EUROPEEN**

(45) Date de publication et mention
de la délivrance du brevet:
**23.04.2003   Bulletin 2003/17**

(51) Int Cl.⁷: **F24F 3/12**

(21) Numéro de dépôt: **98400505.8**

(22) Date de dépôt: **03.03.1998**

(54) **Procédé et installation de production d'air de qualité médicale**

Verfahren und Vorrichtung zur Erzeugung von Luft medizinischer Qualität

Process and device for air production of medical quality

(84) Etats contractants désignés:
**BE CH DE ES GR IT LI NL PT**

(30) Priorité: **11.03.1997   FR 9702853**

(43) Date de publication de la demande:
**16.09.1998   Bulletin 1998/38**

(73) Titulaire: **AIR LIQUIDE SANTE (INTERNATIONAL)**
**75007 Paris (FR)**

(72) Inventeur: **Montausier, Robert**
**95490 Vaureal (FR)**

(74) Mandataire: **Le Moenner, Gabriel et al**
**Societé l'Air Liquide**
**Service Brevets et Marques**
**75, Quai d'Orsay**
**75321 Paris Cédex 07 (FR)**

(56) Documents cités:
**EP-A- 0 582 592          EP-A- 0 716 274**
**FR-A- 2 728 803**

- **PATENT ABSTRACTS OF JAPAN vol. 096, no. 008, 30 août 1996 & JP 08 093701 A (SUNSTAR ENG INC), 9 avril 1996,**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

# Description

La présente invention concerne un procédé et une installation de préparation d'air de qualité médicale à partir d'un flux d'air atmosphérique.

L'air de qualité médicale, plus communément appelé "air médical", trouve des applications variées en milieu hospitalier, où il peut être utilisé non seulement en tant que gaz d'assistance respiratoire, par exemple dans les blocs opératoires ou les salles de réanimation, mais aussi en tant que source d'énergie pneumatique pour des appareils pneumatiques mis en oeuvre dans notamment les blocs opératoires, ou encore dans la pressurisation des caissons hyperbares.

Habituellement, l'air médical est préparé sur site à partir d'air atmosphérique, lequel air atmosphérique doit subir des étapes de traitement et de purification afin d'en éliminer la majeure partie des polluants qui s'y trouvent, à savoir notamment les particules en suspension (poussières, bactéries...), la vapeur d'eau, le dioxyde de carbone ($CO_2$), le monoxyde de carbone (CO), les oxydes d'azote ($NO_x$) et le dioxyde de soufre ($SO_2$).

Les spécifications de qualité auxquelles doit répondre l'air médical sont notamment définies par les normes NFS 90140 et NFS 90155. A titre d'exemple, à la pression atmosphérique et à 0°C, la concentration en vapeur d'eau doit être inférieure à 0,09 gramme par $m^3$, la concentration en dioxyde de carbone doit être inférieure à 350 ppm (partie par million en volume), la concentration en monoxyde de carbone doit être inférieure à 5 ppm, la concentration en dioxyde de soufre doit être inférieure à $16.10^{-3}$ ppm, et la concentration en monoxyde et dioxyde d'azote doit être inférieure à $25,5.10^{-3}$ ppm.

Il existe dans l'art antérieur de plusieurs procédés et dispositifs permettant de préparer de l'air purifié.

De façon connue, de l'air atmosphérique est prélevé directement dans l'atmosphère, comprimé à l'aide d'un compresseur, tel un compresseur à piston ou à membrane, puis envoyé vers au moins une première capacité tampon servant à lisser les variations de pression de l'air causées par la compression. L'air prélevé dans cette capacité tampon est ensuite soumis à une phase d'épuration par séchage et adsorption des impuretés présentes ($CO_2$, CO, $NO_x$, $SO_2$...), avant d'être envoyé dans une seconde capacité tampon, placée en sortie de la zone d'épuration, servant, d'une part, à lisser les variations de teneur en oxygène de l'air médical produit, c'est-à-dire d'homogénéiser ledit air médical, et d'autre part, au stockage de l'air de qualité médicale, avant que celui-ci ne soit envoyé vers un ou plusieurs sites utilisateurs, par exemple un réseau de canalisations de gaz en milieu hospitalier.

Généralement, ce type de dispositif comprend également des filtres mécaniques agencés entre le compresseur, la première capacité tampon, la zone d'épuration, la deuxième capacité tampon et/ou les sites utilisateurs.

Des procédés et dispositifs de ce type sont notamment décrits dans les documents US-A-4,670,223, US-A-4,983,190, FR-A-2728803 et EP-A-O716274.

Toutefois, ces dispositifs de l'art antérieur présentent de nombreux désavantages et inconvénients.

Ainsi, le fait de devoir interposer une première capacité tampon entre les moyens de compression et la zone d'épuration de l'air est très pénalisant du point de vue de l'encombrement, c'est-à-dire de la place occupée par le dispositif de préparation d'air médical au sein du bâtiment hospitalier dans lequel il est installé.

En effet, on a observé que l'on retrouvait, dans cette première capacité tampon, l'essentiel des condensats de vapeur d'eau contenu dans l'air atmosphérique, ainsi qu'une quantité non négligeable d'huile provenant du compresseur.

De là, afin d'éviter tout problème de gel desdits condensats de vapeur d'eau, et donc un colmatage néfaste des conduits par des particules de glace et/ou huileuse, il est nécessaire, voire obligatoire, de placer cette première capacité à l'intérieur du bâtiment, c'est-à-dire dans un local tempéré, ou de la maintenir artificiellement hors gel à l'aide, par exemple, de moyens de chauffage.

On comprend aisément que de telles nécessités sont très pénalisantes, voire inacceptables, tant du point de vue de l'encombrement que du point de vue des coûts énergétiques.

Par ailleurs, pendant les cycles de production d'air médical et/ou en fonction du débit d'utilisation, l'ensemble de la chaîne de filtration, et en particulier la zone d'épuration de l'air, est traversée par de l'air sous pression dont le débit instantané est variable. De là, en cas de forte demande en air médical par le ou les sites utilisateurs, il peut survenir des problèmes de pénuries dus à une impossibilité pour l'ensemble de la chaîne de production de fournir une quantité suffisante d'air médical. A l'inverse, lorsque la production d'air médical est supérieure à la demande par les sites utilisateurs, il peut survenir des sur pressions dans l'ensemble du dispositif de production d'air médical, lesquels sont susceptibles de conduire à une détérioration prématurée des matériels conduisant à un arrêt complet du dispositif de production d'air médical. Etant donné que de tels risques sont susceptibles de mettre en danger la vie des patients, il faut donc tendre à les minimiser.

Le but de la présente invention est donc de proposer un procédé et un dispositif qui:

- ne présentent pas les inconvénients et permettent de pallier les problèmes précités;
- soient sûrs et permettent de produire de l'air médical d'une qualité sensiblement constante et acceptable;
- permettant une production modulable d'air médical, c'est-à-dire adaptée tant aux périodes de forte et de faible demande en air médical par les sites utilisateurs;

- puissent être facilement couplés au réseau de canalisations acheminant l'air médical au sein d'un hôpital ou d'une clinique; et
- soient complètement automatisés.

La présente invention concerne alors un procédé de préparation d'air médical par cycle de production, chaque cycle de production comportant au moins une étape de compression de l'air atmosphérique à une pression supérieure à $10^5$ Pa au moyen d'au moins une source de compression d'air et au moins une étape de purification de l'air atmosphérique comprimé par au moins une étape d'adsorption, l'air purifié médical sous pression étant mis en réserve dans des moyens de stockage/homogénéisation, dans lequel:

- on mesure la pression P de l'air médical à l'intérieur des moyens de stockage/homogénéisation,
- on compare la pression P mesurée à une pression seuil $P_0$ et à une pression maximale $P_m$ prédéterminées, et
- on ajuste la pression P à une pression telle que :

$$P_m > P \geq P_0.$$

Selon le cas, le procédé de l'invention pourra comprendre une ou plusieurs des caractéristiques suivantes:

- lorsque $P < P_0$ , on augmente la pression P en commandant la mise en route de la source de compression d'air pendant un nombre entier de cycles de production de durée D;
- on maintient la marche de la source de compression d'air pendant un temps T correspondant au nombre minimum de cycles de production de durée D nécessaire pour atteindre la pression P désirée;
- la durée D d'un cycle de production est compris entre 1 et 30 minutes, de préférence entre 1 et 15 minutes, préférentiellement encore entre 2 et 7 minutes;
- lorsque $P \geq P_m$, on commande l'arrêt de la source de compression d'air;
- la pression P correspond à une pression ponctuelle ou à un intervalle de pression préfixés;
- on mesure la pression P sensiblement en continu ou de façon séquentielle;
- on fixe les pressions $P_m$ et $P_0$, telles que:

$$1 < \frac{P_m}{P_0} \leq 5;$$

- la pression $P_0$ est comprise dans la gamme $3.10^5$ Pa à $8.10^5$ Pa et/ou en ce que la pression $P_m$ est comprise dans la gamme $9.10^5$ Pa à $15.10^5$ Pa.

La présente invention concerne en outre une installation de préparation d'air médical comprenant:

- au moins une source d'air délivrant de l'air atmosphérique à une pression supérieure à $10^5$ Pa,
- au moins une zone de purification de l'air atmosphérique sous pression comportant des moyens d'adsorption,
- des moyens de stockage/homogénéisation contenant de l'air médical et reliés à un ou plusieurs sites utilisateur,
- des moyens de mesure permettant de déterminer la pression P de l'air médical contenu dans lesdits moyens de stockage/homogénéisation, et
- des moyens de pilotage comparant la pression P mesurée à une pression seuil $P_0$ donnée et commandant, lorsque $P < P_0$, la fourniture d'air atmosphérique sous pression par ladite source d'air à ladite zone de purification.

Selon le cas, l'installation de l'invention pourra comprendre une ou plusieurs des caractéristiques suivantes:

- ladite source d'air est un compresseur à membrane (s), à vis, à spirales ou à piston(s), de préférence un compresseur à vis (compresseur rotatif).
- lesdits moyens d'adsorption sont deux adsorbeurs contenant chacun au moins un lit d'au moins un matériau adsorbant. Ces deux adsorbeurs fonctionnent de façon cyclique, c'est-à-dire que lorsque l'un des adsorbeurs est en phase d'épuration, l'autre adsorbeur est en phase de régénération. Le matériau adsorbant contenu dans les adsorbeurs est choisi dans le groupe formé par les zéolites, le charbon actif, le gel de silice, l'alumine activée et leurs mélanges.
- les moyens de stockage/homogénéisation sont une capacité tampon;
- l'air médical est acheminé depuis les moyens de stockage/homogénéisation vers au moins un site utilisateur au moyen d'une canalisation ou d'un réseau de canalisations situés dans un bâtiment hospitalier.
- lesdits moyens de mesure de la pression P sont directement connectés aux moyens de stockage/homogénéisation ou à une expansion desdits moyens de stockage/homogénéisation au sein de laquelle règne une pression égale à la pression P;
- lesdits moyens de pilotage incluent un automate programmable;
- des moyens de filtration mécanique sont agencés entre la source d'air sous pression, la zone de purification, les moyens de stockage/homogénéisation et/ou les sites utilisateur;
- les moyens de pilotage commandent l'arrêt de la source de débit et/ou le déclenchement d'une alarme sonore et/ou visuelle, lorsqu'un capteur de pression différentielle, agencé de manière à mesurer la pression entre l'entrée et la sortie d'au moins le premier filtre et relié audits moyens de pilotage, détecte une différence de pression supérieure ou égale à une valeur préfixée.

Le procédé et l'installation de préparation d'air médical de l'invention vont maintenant être décrits plus en détail à l'aide de modes de réalisation donnés à titre illustratif, mais nullement limitatif, en référence aux figures annexées.

La figure 1 représente un premier mode de réalisation d'une installation de préparation d'air de qualité médicale selon l'invention mettant en oeuvre une ligne unique de compression/épuration de l'air.

La figure 2 représente un second mode de réalisation de l'invention de préparation d'air de qualité médicale selon l'invention mettant en oeuvre deux lignes parallèles de compression/épuration de l'air.

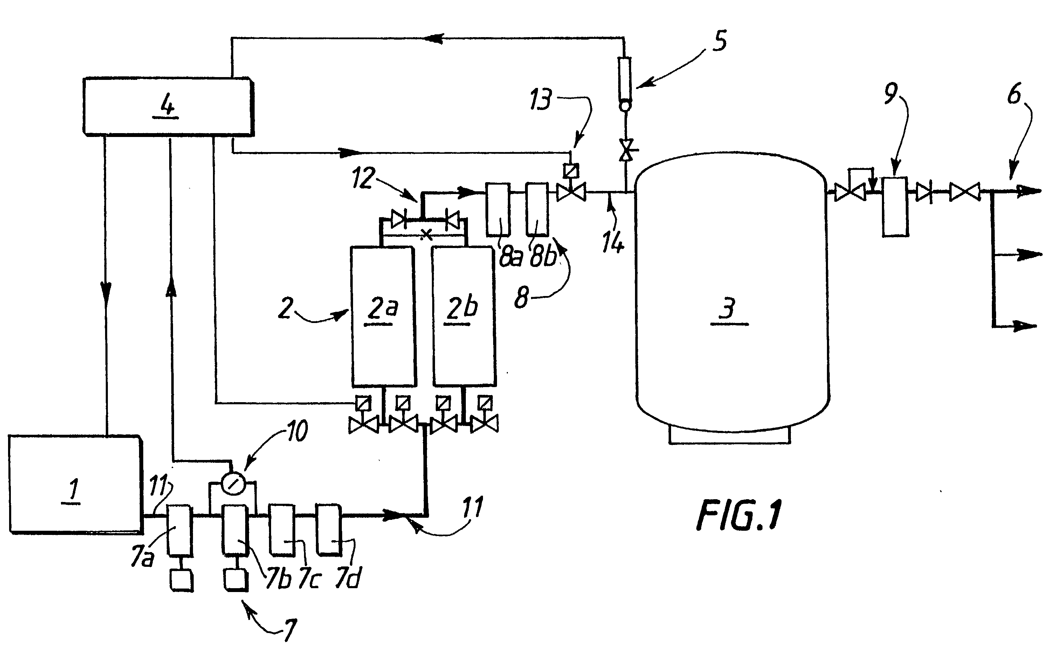

La figure 1 représente une installation de préparation d'air médical comportant un compresseur 1 rotatif (ou compresseur à vis) prélevant de l'air atmosphérique et le comprimant à une pression comprise dans la gamme $2.10^5$ Pa à $20.10^5$ Pa, de préférence entre $8.10^5$ Pa et $15.10^5$ Pa.

L'air ainsi comprimé étant acheminé, via une canalisation 11, jusqu'à une zone de purification 2 de l'air atmosphérique, après avoir traversé des moyens de filtration mécanique 7 constitués d'un cyclone 7a suivi de trois filtres 7b, 7c et 7d, lesquels peuvent être au besoin munis de purgeurs automatiques. Le cyclone 7a et les filtres 7b, 7c et 7d permettent de pré-purifier le flux d'air comprimé en retenant non seulement les poussières et autres particules solides pouvant s'y trouver, ainsi qu'une partie de la vapeur d'eau contenue dans le flux d'air compris, mais aussi de retenir les gouttelettes d'huile libérées par le compresseur et d'éviter ainsi une pollution de toute l'installation de production d'air médical ou du réseau de canalisations hospitalier auquel elle est raccordée.

La zone de purification 2 de l'air atmosphérique comprimé, déjà partiellement épuré, comporte deux adsorbeurs 2a et 2b contenant chacun un ou plusieurs lits d'un matériau adsorbant, tel de l'alumine, du charbon actif, du gel de silice, des zéolites ou leurs mélanges.

A titre indicatif, on pourra préparer de l'air médical en utilisant un adsorbant de type zéolite commercialisé par la société UOP sous la marque MOLSIV et la référence 13XAPG.

Préférentiellement, les deux adsorbeurs 2a et 2b travaillent en phase alternée, c'est-à-dire que lorsque l'un des adsorbeurs est en phase d'épuration, l'autre adsorbeur est en phase de régénération; on pourra par exemple se reporter à EP-A-0716274, lequel décrit un tel arrangement.

De façon classique, la régénération des lits d'adsorbants se fait par balayage à contre-courant au moyen d'un gaz de désorption, tel de l'air médical ou de l'azote.

Après son passage dans la zone de purification, l'air médical est récupéré et acheminé, via une conduite 12, 14, jusqu'à une capacité 3 de stockage et homogénéisation de l'air médical.

Il est souhaitable d'agencer sur la conduite 12, en sortie des adsorbeurs des moyens de filtration mécanique 8, 8a, 8b afin de retenir d'éventuelles particules solides résultant de l'attrition du matériau adsorbant au sein des adsorbeurs.

Une vanne 13, aménagée en aval de la conduite 12, permet de réguler l'entrée d'air de qualité médicale dans la capacité 3.

Un capteur de pression 5 est agencé sur la partie de conduite 12 située en aval de la vanne 13, c'est-à-dire la partie 14 référencée sur la figure 1. La pression de l'air médical s'exerçant dans cette partie 14 étant égale à celle régnant à l'intérieur de la capacité 3, ce mode de réalisation est préféré; toutefois, il est aussi possible d'aménager le capteur de pression 5 de sorte que la prise de pression soit effectuée directement à l'intérieur de la capacité 3. Le capteur de pression 5 est par exemple un capteur analogique du type 4-20 mA commercialisé par la société KELLER ou par la société BOURDON-SEDEME, lequel renseigne les moyens de pilotage 4 quant à l'évolution de la pression s'exerçant dans la capacité 3.

Les moyens de pilotage 4 qui comprennent un automate programmable, tel l'automate de type MICRO 612 commercialisé par la société MODICON, commande notamment le fonctionnement du compresseur 1 et l'ouverture et, le cas échéant, la fermeture de la vanne 13, en fonction des informations de pression qui leurs sont transmises par le capteur de pression 5. Ainsi, tant que la pression s'exerçant à l'intérieur de la capacité 3 est supérieure à une valeur de pression seuil $P_0$ donnée, par exemple $P_0 = 15.10^5$ $P_a$, de par une faible demande en air médical des sites utilisateurs 6, les moyens de pilotage 4 commandent l'arrêt du compresseur 1 et la fermeture de la vanne 13. Dans ce cas, la quantité d'air médical renfermée par la capacité 3 est suffisante pour répondre à la demande des sites utilisateurs 6. L'arrêt du compresseur 1 et la fermeture de la vanne 13 sont poursuivis tant que la pression à l'intérieur de la capacité 3 reste supérieure à ladite valeur de pression seuil $P_0$.

Par contre, lorsque la pression s'exerçant à l'intérieur de la capacité 3 devient inférieure à ladite valeur seuil $P_0$, par exemple inférieure à $3.10^5$ Pa, les moyens de pilotage 4 commandent la mise en marche du compresseur 1 et l'ouverture subséquente de la vanne 13, pendant le nombre de cycles, c'est-à-dire le temps, nécessaires pour atteindre une pression maximale $P_m$ admissible au sein de la capacité 3.

Si à l'issue de ce nombre de cycles, la pression s'exerçant dans la capacité 3 est comprise entre la valeur seuil minimale $P_0$ et la valeur de pression maximale $P_m$, alors les moyens de pilotages 4 décident de l'arrêt de la compression et de la fermeture de la vanne 13.

Toutefois, si à l'issue de ce cycle de production d'air médical, la pression s'exerçant à l'intérieur de la capacité 3 ne correspond pas aux prévisions, de par une forte demande en air médical par les sites utilisateurs 6, par exemple, les moyens de pilotage 4 décident du maintien en fonctionnement du compresseur 1 et de l'ouverture de la vanne 13, c'est-à-dire, en d'autres termes, de la poursuite de la production d'air médical.

Enfin, lorsque le capteur de pression 5 détecte une pression à l'intérieur de la capacité 3 supérieure à une valeur de pression maximale $P_m$ admissible, les moyens de pilotage 4 commandent l'arrêt du compresseur 1 et la fermeture de la vanne 13, tant que la pression s'exerçant dans la capacité 3 ne redescend pas à une valeur de pression nécessitant la remise en fonctionnement de l'installation de production d'air médical.

De préférence, le fonctionnement de l'installation de préparation d'air médical est basé sur des cycles d'épuration. Un cycle d'épuration correspond sensiblement à la durée D pendant laquelle l'adsorbant contenu dans les adsorbeurs 2a, 2b peut effectuer une épuration efficace de l'air sans nécessiter de régénération, c'est-à-dire le temps T nécessaire à une saturation complète de l'adsorbant par adsorption sur celui-ci des impuretés ($CO_2$, $CO$, $NO_x$, $SO_2$...) contenues dans l'air atmosphérique à épurer.

Cette durée D dépend à la fois du type d'adsorbants mis en oeuvre et de la quantité de polluants présents dans l'air; un cycle de production dure généralement de 1 à 30 minutes et, de préférence, de 2 à 7 minutes.

En d'autres termes, étant donné que les adsorbeurs fonctionnent de façon alternée, c'est-à-dire que pendant que l'adsorbeur 2a est en phase d'épuration, l'adsorbeur 2b est en phase de régénération, et inversement, la durée D d'un cycle d'épuration correspondant également au temps nécessaire à la régénération complète de l'adsorbant situé dans l'adsorbeur en phase d'épuration.

Pour une plus grande sécurité de l'installation, il est souhaitable d'aménager un capteur de pression différentielle 10 (capteur analogique ou pressostat différentiel) entre l'entrée et la sortie du filtre 7b et relié au moyen de pilotage 4, afin de détecter toute rupture néfaste du séparateur d'huile placé en sortie de compresseur, laquelle rupture pourrait entraîner une pollution du réseau.

En effet, si une telle rupture se produisait, le colmatage du filtre 7b qui en résulterait, serait immédiatement détecté par ledit capteur de pression différentielle 10, lequel transmettrait cette information au moyen de pilotage 4 qui arrêterait aussitôt la marche du compresseur 1, tout en déclenchant une alarme sonore et/ou visuelle.

Afin d'éviter toute contamination du réseau 6 par des micro-organismes, il est souhaitable d'aménager entre la capacité 3 et ledit réseau 6 un filtre bactérien 9.

En outre, pendant les phases d'arrêt de l'installation, il est également possible de maintenir sous pression la partie de l'installation comprise entre le compresseur 1 et la vanne 13, ceci conformément à l'enseignement du document FR-A-2728803.

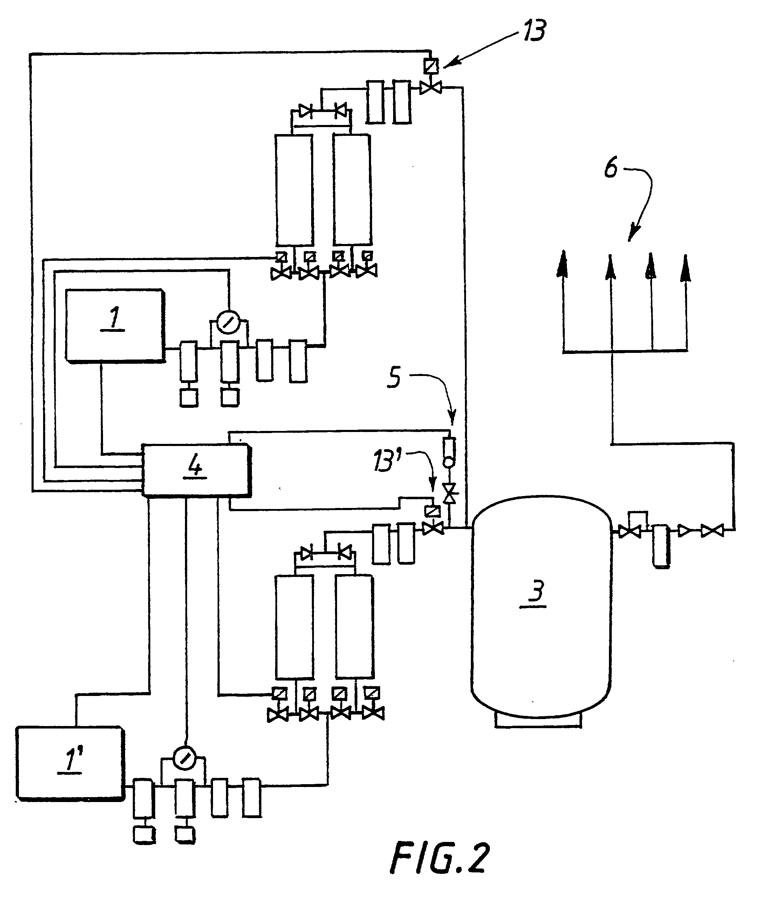

La figure 2 représente une installation de préparation d'air médical selon l'invention, laquelle comporte deux lignes de production d'air médical, lesquelles sont reliées à une capacité unique 3 dont la pression interne est mesurée à l'aide d'un capteur 5 de pression relié, là aussi, à des moyens de pilotage 4, commandant les compresseurs 1 et 1' et l'ouverture ou la fermeture des vannes 13 et 13'.

En fait, cette installation comprend deux unités identiques à celles décrites à la figure 1, couplées l'une à l'autre.

De par ce mode de réalisation, en cas d'arrêt intempestif de l'une des deux unités ou lignes de production d'air, de l'air médical pourra néanmoins être produit et acheminé vers les sites utilisateurs 6 par mise en service de la deuxième unité de production, les deux unités étant commandées par les mêmes moyens de pilotage 4 et l'air médical produit étant acheminé jusqu'à la même capacité 3.

De même, si la demande en air médical était supérieure à la capacité d'une ligne de production, la deuxième ligne se mettrait en fonctionnement pour compenser cet excès de consommation.

**Revendications**

1. Procédé de préparation d'air médical par cycle de production, chaque cycle de production comportant au moins une étape de compression de l'air atmosphérique à une pression supérieure à $10^5$ Pa au moyen d'au moins une source (1) de compression d'air et au moins une étape de purification de l'air atmosphérique comprimé par au moins une étape d'adsorption (2a, 2b), l'air purifié médical sous pression étant mis en réserve dans des moyens de stockage/homogénéisation (3), **caractérisé en ce que**

   - on mesure la pression P de l'air médical à l'intérieur des moyens de stockage/homogénéisation (3),
   - on compare la pression P mesurée à une pression seuil $P_0$ et à une pression maximale $P_m$ prédéterminées, et
   - on ajuste la pression P à une pression, telle que:

$$P_m > P \geq P_0.$$

2. Procédé selon la revendication 1, **caractérisé en ce que**, lorsque $P < P_0$, on augmente la pression P en commandant la mise en route de la source (1) de compression d'air pendant un nombre entier de cycles de production de durée D.

3. Procédé selon la revendication 2, **caractérisé en ce qu'**on maintient la marche de la source (1) de compression d'air pendant un temps T correspondant au nombre minimum de cycles de production de durée D nécessaire pour atteindre la pression P désirée.

4. Procédé selon l'une des revendications 2 ou 3, **caractérisé en ce que** la durée D d'un cycle de production est compris entre 1 et 30 minutes, de préférence entre 2 et 7 minutes.

5. Procédé selon la revendication 1, **caractérisé en ce que**, lorsque $P \geq P_m$, on commande l'arrêt de la source (1) de compression d'air.

6. Procédé selon l'une des revendication 1 à 5, **caractérisé en ce que** la pression P, telle que $P_m > P \geq P_0$, correspond à une pression ponctuelle ou à un intervalle de pression préfixés.

7. Procédé selon l'une des revendication 1 à 6, **caractérisé en ce qu'**on mesure la pression P sensiblement en continu ou de façon séquentielle.

8. Procédé selon l'une des revendications 1 à 7, **caractérisé en ce qu'**on fixe les pressions $P_m$ et $P_0$, telles que:

$$1 < \frac{P_m}{P_0} \leq 5.$$

9. Procédé selon l'une des revendications 1 à 8, **caractérisé en ce que** la pression $P_0$ est comprise dans la gamme $3.10^5$ Pa à $8.10^5$ Pa et/ou **en ce que** la pression $P_m$ est comprise dans la gamme $9.10^5$ Pa à $15.10^5$ Pa.

10. Installation de préparation d'air médical comprenant:

- au moins une source d'air (1) délivrant de l'air atmosphérique à une pression supérieure à $10^5$ Pa,
- au moins une zone de purification (2) de l'air atmosphérique sous pression comportant des moyens d'adsorption (2a, 2b),
- des moyens de stockage/homogénéisation (3) contenant de l'air médical et reliés à un ou plusieurs sites utilisateur (6), **caractérisé en ce que** l'installation aussi comprend:

    - des moyens de mesure (5) permettant de déterminer la pression P de l'air médical contenu dans lesdits moyens de stockage/homogénéisation (3), et
    - des moyens de pilotage (4) comparant la pression P mesurée à une pression seuil $P_0$ donnée et commandant, lorsque $P < P_0$, la fourniture d'air atmosphérique sous pression par ladite source d'air (1) à ladite zone de purification (2).

11. Installation selon la revendication 10, **caractérisée en ce que** ladite source d'air (1) est un compresseur à vis, à pistons, à spirales ou à membranes.

12. Installation selon la revendication 10, **caractérisée en ce que** lesdits moyens d'adsorption (2a,2b) comprenant au moins deux adsorbeurs contenant chacun au moins un lit d'au moins un matériau adsorbant.

13. Installation selon la revendication 10, **caractérisée en ce que** les moyens de stockage/homogénéisation (3) sont une capacité tampon.

14. Installation selon la revendication 10, **caractérisée en ce que** lesdits moyens de pilotage (4) incluent un automate programmable.

15. Installation selon l'une des revendications 10 à 14, **caractérisée en ce que** des moyens de filtration mécanique (7, 7b, 7c, 7d, 8, 8a, 8b, 9) sont agencés entre la source d'air (1) sous pression, la zone de purification (2), les moyens de stockage/homogénéisation (3) et/ou les sites utilisateur (6).

16. Installation selon l'une des revendications 12 à 15, **caractérisée en ce que** les moyens de pilotage (4) commandent l'arrêt de la source de débit (1) et/ou le déclenchement d'une alarme sonore et/ou visuelle, lorsqu'un capteur de pression différentielle (10), agencé de manière à mesurer la pression entre l'entrée et la sortie d'au moins le premier filtre (7b) et relié audits moyens de pilotage (4), détecte une différence de pression supérieure ou égale à une valeur préfixée.

**Claims**

1. Process for preparing medical air by a production cycle, each production cycle comprising at least one step of compressing atmospheric air to a pressure greater than $10^5$ Pa by means of at least one air compression source (1) and at least one step of purifying compressed atmospheric air by at least one adsorption step (2a, 2b), the pressurized purified medical air being placed in reserve in storage/homogenization means (3), **characterized in that**

- the pressure P of the medical air is measured inside the storage/homogenization means (3),
- the measured pressure P is compared with a predetermined threshold pressure $P_0$ and with a predetermined maximum pressure $P_m$, and
- the pressure P is adjusted to a pressure such that: $P_m > P \geq P_0$.

2. Process according to Claim 1, **characterized in that**, when $P < P_0$, the pressure P is increased by starting up of the air compression source (1) for a whole number of production cycles of duration D.

3. Process according to Claim 2, **characterized in that** the air compression source (1) is kept running for a time T corresponding to the minimum number of production cycles of duration D needed to reach the desired pressure P.

4. Process according to either of Claims 2 and 3, **characterized in that** the duration D of a production cycle is between 1 and 30 minutes, preferably between 2 and 7 minutes.

5. Process according to Claim 1, **characterized in that**, when $P \geq P_m$, the air compression source (1) is shut down.

6. Process according to one of Claims 1 to 5, **characterized in that** the pressure P such that $P_m > P \geq P_0$ corresponds to a discrete pressure or to a preset pressure range.

7. Process according to one of Claims 1 to 6, **characterized in that** the pressure P is measured almost continuously or sequentially.

8. Process according to one of Claims 1 to 7, **characterized in that** the pressures $P_m$ and $P_0$ are set such that:

$$1 < \frac{P_m}{P_0} \leq 5.$$

9. Method according to one of Claims 1 to 8, **characterized in that** the pressure $P_0$ is within the range $3 \times 10^5$ Pa to $8 \times 10^5$ Pa and/or **in that** the pressure $P_m$ is within the range $9 \times 10^5$ Pa to $15 \times 10^5$ Pa.

10. Plant for preparing medical air comprising:

- at least one air source (1) delivering atmospheric air at a pressure greater than $10^5$ Pa,
- at least one region (2) for purifying pressurized atmospheric air comprising adsorption means (2a, 2b),
- storage/homogenization means (3) containing medical air and connected to one or more user sites (6), **characterized in that** the plant also comprises
- measurement means (5) making it possible to determine the pressure P of the medical air contained in the said storage/homogenization means (3), and
- control means (4) comparing the measured pressure P with a given threshold pressure $P_0$ and, when $P < P_0$, supplying pressurized atmospheric air from the said air source (1) to the said purification region (2).

11. Plant according to Claim 10, **characterized in that** the said air source (1) is a screw, piston, scroll or membrane compressor.

12. Plant according to Claim 10, **characterized in that** the said adsorption means (2a, 2b) comprise at least two adsorbers each one containing at least one bed of at least one adsorbing material.

13. Plant according to Claim 10, **characterized in that** the storage/homogenization means (3) are a buffer tank.

14. Plant according to Claim 10, **characterized in that** the said control means (4) include a programmable controller.

15. Plant according to one of Claims 10 to 14, **characterized in that** mechanical filtration means (7, 7b, 7c, 7d, 8, 8a, 8b, 9) are arranged between the pressurized air source (1), the purification region (2), the storage/homogenization means (3) and/or the user sites (6).

16. Plant according to one of Claims 12 to 15, **characterized in that** the control means (4) control the shutdown of the output source (1) and/or the triggering of an audible and/or visual alarm when a differential pressure sensor (10), arranged so as to measure the pressure between the input and the output of at least the first filter (7b) and connected to the said control means (4), detects a pressure difference greater than or equal to a preset value.

**Patentansprüche**

1. Verfahren zur Herstellung medizinischer Luft durch einen Produktionszyklus, wobei jeder Produktionszyklus zumindest einen Schritt des Komprimierens atmosphärischer Luft auf einen Druck größer $10^5$ Pa mittels zumindest einer Luftkompressionsquelle (1) und zumindest einen Schritt des Reinigens der komprimierten atmosphärischen Luft durch zumindest einen Adsorptionsschritt (2a, 2b) umfasst, wobei die unter Druck stehende, gereinigte medizinische Luft in Speicher-/Homogenisierungsmitteln (3) bevorratet wird,
**dadurch gekennzeichnet, dass**:

- der Druck P der medizinischen Luft im Inneren der Speicher-/Homogenisierungsmittel (3) gemessen wird,
- der gemessene Druck P mit einem vorbestimmten Grenzwertdruck $P_0$ und einem vorbestimmten Maximaldruck $P_m$ verglichen wird und
- der Druck P auf einen Druck eingestellt wird, so dass gilt: $P_m > P \geq P_0$.

2. Verfahren nach Anspruch 1, **dadurch gekennzeichnet, dass**, wenn $P < P_0$, der Druck P erhöht wird, indem die Ingangsetzung der Luftkompressionsquelle (1) während einer ganzzahligen Anzahl von Produktionszyklen der Dauer D veranlasst wird.

3. Verfahren nach Anspruch 2, **dadurch gekennzeichnet, dass** der Betrieb der Luftkompressionsquelle (1) während einer Zeit T aufrechterhalten wird, die der Mindestzahl von Produktionszyklen der Dauer D entspricht, die notwendig ist, um den erwünschten Druck P zu erzielen.

4. Verfahren nach einem der Ansprüche 2 oder 3, **dadurch gekennzeichnet, dass** die Dauer D eines Produktionszyklus zwischen 1 und 30 Minuten, vorzugsweise zwischen 2 und 7 Minuten, liegt.

5. Verfahren nach Anspruch 1, **dadurch gekennzeichnet, dass**, wenn $P \geq P_m$, das Anhalten der Luftkompressionsquelle (1) veranlasst wird.

6. Verfahren nach einem der Ansprüche 1 bis 5, **dadurch gekennzeichnet, dass** der Druck P, beispielsweise mit $P_m > P \geq P_0$, einem auf einen Punkt beschränkten Druck oder einem vorbestimmten Druckintervall entspricht.

7. Verfahren nach einem der Ansprüche 1 bis 6, **dadurch gekennzeichnet, dass** der Druck P im wesentlichen kontinuierlich oder auf sequentielle Weise gemessen wird.

8. Verfahren nach einem der Ansprüche 1 bis 7, **dadurch gekennzeichnet, dass** die Drücke $P_m$ und $P_0$ so festgelegt werden, dass gilt:

$$1 < \frac{P_m}{P_o} \leq 5.$$

9. Verfahren nach einem der Ansprüche 1 bis 8, **da-**

**durch gekennzeichnet, dass** der Druck $P_0$ in dem Bereich zwischen $3.10^5$ Pa und $8.10^5$ Pa liegt und/oder dass der Druck $P_m$ in dem Bereich zwischen $9.10^5$ Pa und $15.10^5$ Pa liegt.

10. Vorrichtung zur Herstellung medizinischer Luft mit:

- zumindest einer Luftquelle (1), die atmosphärische Luft mit einem Druck größer als $10^5$ Pa liefert,
- zumindest einem Reinigungsbereich (2) für unter Druck stehende atmosphärische Luft, der Adsorptionsmittel (2a, 2b) aufweist,
- Speicher-/Homogenisierungsmitteln (3), die medizinische Luft enthalten und mit einem oder mehreren Verwendungsorten (6) verbunden sind, **dadurch gekennzeichnet, dass** die Vorrichtung außerdem folgendes umfasst:

  - Messmittel (5), die es gestatten, den Druck P der in den Speicher-/Homogenisierungsmitteln (3) enthaltenen medizinischen Luft zu ermitteln, und
  - Steuermittel (4), die den gemessenen Druck P mit einem gegebenen Grenzwertdruck $P_0$ vergleichen und die Zufuhr unter Druck stehender atmosphärischer Luft durch die Luftquelle (1) zu dem Reinigungsbereich (2) auslöst, falls $P < P_0$.

11. Vorrichtung nach Anspruch 10, **dadurch gekennzeichnet, dass** die Luftquelle (1) ein Schneckenkompressor, ein Kolbenkompressor, ein Spiralkompressor oder ein Membrankompressor ist.

12. Vorrichtung nach Anspruch 10, **dadurch gekennzeichnet, dass** die Adsorptionsmittel (2a, 2b) zumindest zwei Adsorber umfassen, die jeweils zumindest ein Bett aus zumindest einem adsorbierenden Material enthalten.

13. Vorrichtung nach Anspruch 10, **dadurch gekennzeichnet, dass** die Speicher-/Homogenisierungsmittel (3) eine Pufferspeicherkapazität bilden.

14. Vorrichtung nach Anspruch 10, **dadurch gekennzeichnet, dass** die Steuermittel (4) einen programmierbaren Automaten enthalten.

15. Vorrichtung nach einem der Ansprüche 10 bis 14, **dadurch gekennzeichnet, dass** mechanische Filtermittel (7, 7b, 7c, 7d, 8, 8a, 8b, 9) zwischen der Druckluftquelle (1), dem Reinigungsbereich (2), den Speicher-/Homogenisierungsmitteln (3) und/oder den Verwendungsorten (6) angeordnet sind.

16. Vorrichtung nach einem der Ansprüche 12 bis 15, **dadurch gekennzeichnet, dass** die Steuermittel (4) das Anhalten der Durchflussquelle (1) und/oder die Auslösung eines akustischen und/oder sichtbaren Alarms steuern, wenn ein Differenzdruckmesser (10), der so angeordnet ist, dass er den Druck zwischen dem Eingang und dem Ausgang zumindest des ersten Filters (7b) misst, und der mit den Steuermitteln (4) verbunden ist, eine Druckdifferenz erfasst, die größer oder gleich einem festgelegten Wert ist.

FIG.1

FIG.2